# EUROPÄISCHE PATENTSCHRIFT

(11) **EP 1 896 740 B1**
(45) Veröffentlichungstag und Bekanntmachung des Hinweises auf die Patenterteilung: **15.06.2011**
(21) Anmeldenummer: 06761707.6
(22) Anmeldetag: 27.06.2006
(51) Int. Cl.: F16C 19/38, F16C 19/50, F16C 19/56, F16C 33/36, F16H 57/02

(54) **MEHRREIHIGES SCHRÄGWÄLZLAGER MIT KUGELSCHEIBEN IN TANDEMANORDNUNG, INSBESONDERE ZUR LAGERUNG DER KEGELRITZELWELLE IN EINEM KRAFTFAHRZEUG-HINTERACHSGETRIEBE**
MULTIPLE-ROW ANGULAR CONTACT ANTIFRICTION BEARING, PARTICULARLY FOR MOUNTING THE BEVEL PINION SHAFT IN A MOTOR VEHICLE REAR AXLE DIFFERENTIAL
PALIER A ROULEMENT OBLIQUE MULTI-RANGEES COMPORTANT DES RONDELLES EN TANDEM, NOTAMMENT DESTINE A LOGER L'ARBRE A PIGNON CONIQUE D'UNE TRANSMISSION A ESSIEU ARRIERE MOTEUR D'UN VEHICULE

(30) Priorität: 28.06.2005 DE 102005029983
(43) Veröffentlichungstag der Anmeldung: 12.03.2008
(73) Patentinhaber: Schaeffler Technologies GmbH & Co. KG, 91074 Herzogenaurach (DE)
(72) Erfinder: HOFMANN, Heinrich, 97422 Schweinfurt (DE); DÖPPLING, Horst, 91074 Herzogenaurach (DE); PLANK, Robert, 91085 Weisendorf (DE); GRUNAU, Arbogast, 91085 Weisendorf (DE)
(86) Internationale Anmeldenummer: PCT/DE2006/001095
(87) Internationale Veröffentlichungsnummer: WO 2007/000149

(56) Entgegenhaltungen:
- DE-A1- 4 334 195
- DE-A1- 19 839 481
- DE-C- 331 455
- DE-C- 391 950
- DE-C1- 19 534 287
- DE-U- 1 949 488
- GB-A- 156 523
- US-B1- 6 254 277

## Beschreibung

### Gebiet der Erfindung

Die Erfindung betrifft ein mehrreihiges Schrägwälzlager nach den oberbegriffsbildenden Merkmalen des Patentanspruchs 1, und sie ist insbesondere vorteilhaft bei einem zweireihigen Schrägwälzlager zur Lagerung der Kegelritzelwelle in einem Kraftfahrzeug-Hinterachsgetriebe realisierbar.

### Hintergrund der Erfindung

Dem Fachmann in der Kraftfahrzeug-Getriebetechnik ist es allgemein bekannt, dass bei einem Kraftfahrzeug mit Hinterachsantrieb das Motordrehmoment nach einem Automat- oder Schaltgetriebe über eine Kegelritzelwelle mit einem Kegelritzel sowie über ein Tellerrad auf die aus zwei Achswellen bestehende Antriebsachse übertragen wird, wobei durch ein aus mehreren Ausgleichrädern bestehendes Ausgleichsgetriebe die Drehzahldifferenz zwischen den beiden Achswellen bei Kurvenfahrt ausgeglichen wird. Die Kegelritzelwelle wird dabei im Gehäuse des Hinterachsgetriebes über zwei voneinander beabstandete Schrägwälzlager gehalten, die aufgrund der aus den hohen zu übertragenden Drehmomenten resultierenden hohen Beanspruchung und wegen des begrenzten Einbauraums zumeist als zwei gegeneinander angestellte sowie in Axialrichtung vorgespannte Kegelrollenlager ausgebildet sind. Diese Kegelrollenlager werden wegen der hohen auftretenden Axialkräfte mit großem Druckwinkel ausgebildet und sorgen für eine hohe Steifigkeit des Kegelritzels im Zahneingriff.

Da bei derartigen Kegelrollenlagern jedoch aufgrund ihrer Vorspannung zwischen der Stirnfläche der Kegelrollen und der Führungsfläche des Lagerbords eine gleitende Reibung einsetzt, durch die es zu einem Verschleiß an den Kegelrollen und am Lagerbord kommt, wurde es durch die DE 198 39 481 A1 vorgeschlagen, die Kegelrollenlager durch einseitig belastbare zweireihige Tandem-Schrägkugellager zu ersetzen, die zueinander in O-Anordnung angestellt sind. Diese Tandem-Schrägkugellager bestehen im Wesentlichen aus einem äußeren Lagerring und einem inneren Lagerring sowie aus einer Vielzahl in zwei Reihen nebeneinander zwischen den Lagerringen angeordneter Lagerkugeln, die durch zwei getrennte Lagerkäfige für jede Reihe in Umfangsrichtung in gleichmäßigen Abständen zueinander gehalten werden. Die Innenseite des äußeren Lagerrings ist dabei mit zwei benachbarten und jeweils einseitig durch eine Schulter begrenzten Laufbahnen ausgebildet, die auf gemeinsamen Druckwinkelachsen mit zwei benachbarten und ebenfalls jeweils einseitig durch Schultern begrenzten Laufbahnen in der Außenseite des inneren Lagerrings angeordnet sind. Auf diesen Laufbahnen rollt jeweils eine Reihe der Lagerkugeln mit ihren Laufflächen ab, wobei die Durchmesser der Laufbahnen unterschiedlich und die Durchmesser der Lagerkugeln gleich sind. Durch den Einsatz solcher Tandem-Schrägkugellager anstelle von Kegelrollenlagern soll dabei erreicht werden, dass sich aufgrund der nunmehr entfallenden Gleitreibung zwischen den Lagerkugeln und den Laufbahnschuttern ein wesentlich geringeres Reibmoment ergibt, durch das der Verschleiß und die Temperatur des Lagers gesenkt und dessen Wirkungsgrad verbessert wird.

Dennoch hat sich ein solcher Ersatz von Kegelrollenlagern durch zweireihige Tandem-Schrägkugellager in der Praxis dahingehend als nachteilig erwiesen, dass diese Schrägkugellager durch die hintereinander angeordneten Laufbahnen für die Lagerkugeln sowie durch die zum Erreichen der erforderlichen Traglast großen Durchmesser der Lagerkugeln und durch deren Lagerkäfige im Vergleich zu Kegelrollenlagern einen erhöhten axialen Einbauraum erfordern. Soll ein solches Schrägkugellager darüber hinaus noch eine höhere Traglast als ein Kegelrollenlager aufweisen, sind somit aufwändige Änderungen der Lagersitze im Gehäuse des Hinterachsgetriebe notwendig, die dessen Herstellungskosten in nachteiliger Weise erhöhen. Darüber hinaus verursachen solche zweireihigen Schrägkugellager gegenüber Kegelrollenlagern auch einen erhöhten Fertigungs- und Materialaufwand bei der Lagerherstellung, so dass sich deren Herstellungskosten ebenfalls erhöhen. Desweiteren hat sich die notwendigerweise unterschiedliche Ausbildung der Laufbahnradien gegenüber den Kugelradien bei solchen Schrägkugellagern dahingehend als nachteilig erwiesen, dass die Lagerkugeln dadurch nur im Punktkontakt zu ihren Laufbahnen stehen und somit im Bereich der Druckwinkelachse eine hohe Flächenpressung auf den Laufbahnen verursachen, die für einen erhöhten Verschleiß dieser Laufbahnen ursächlich ist. Zusätzlich treten durch die bei normaler Schmiegung die Schulterkante der Laufbahnen überlappenden, jedoch nach Aufbrauch der Schmiegung an der Schulterkante anliegenden Lagerkugeln im Bereich dieser Schulterkante hohe Kantenspannungen auf, durch die der Verschleiß der Laufbahnen der Lagerkugeln noch weiter erhöht wird und durch die die Gebrauchsdauer solcher Schrägkugellager erheblich abnimmt.

Weiter beschreibt Dokument DE 331 455 C Wälzlager, wobei die Wälzkörper als Kugelscheiben ausgebildet sind. In einer Ausführungsform ist das Wälzlager als zweireihiges Radiallager ausgebildet, wobei die benachbarten Kugelscheiben unmittelbar nebeneinander und parallel zueinander angeordnet sind. In einer weiteren Ausführungsform ist das Wälzlager als zweireihiges Schrägwälzlager ausgebildet, wobei die beiden Wälzkörperreihen in O-Anordnung angeordnet sind.

### Aufgabe der Erfindung

Ausgehend von den dargelegten Nachteilen der Lösungen des bekannten Standes der Technik liegt der Erfindung deshalb die Aufgabe zu Grunde, ein mehrreihiges Schrägwälzlager zu konzipieren, welches sich gegenüber mehrreihigen Schrägkugellagern durch einen minimierten axialen und radialen Einbauraum bei gleicher oder erhöhter Tragfähigkeit sowie durch einen geringen Fertigungs- und Materialaufwand und damit durch geringe Herstellungskosten auszeichnet und mit welchem ein aus einer hohen Flächenpressung und einer hohen Kantenspannung durch die Wälzkörper resultierender erhöhter Verschleiß der Laufbahnen der Wälzkörper wirksam vermieden und damit die Gebrauchsdauer des Schrägwälzlagers erhöht wird.

### Beschreibung der Erfindung

Erfindungsgemäß wird diese Aufgabe bei einem mehrreihigen Schrägwälzlager nach dem Oberbegriff des Anspruchs 1 derart gelöst, dass die Wälzkörper jeder Reihe als Kugelscheiben mit jeweils zwei symmetrisch von einer Kugelgrundform abgeflachten sowie parallel zueinander angeordneten Seitenflächen ausgebildet sind, deren Laufbahnen in den Lagerringen parallel zueinander verlaufende Druckwinkelachsen aufweisen und derart aneinander angrenzend angeordnet sind, dass die jeweils benachbarten Wälzkörper jeder Reihe mit ihren zueinander weisenden Seitenflächen unmittelbar nebeneinander, auf einer gemeinsamen, rechtwinklig zu den Druckwinkelachsen verlaufenden Querachse angeordnet und diese Seitenflächen zugleich als gegenseitige Führungsflächen ausgebildet sind.

Der erfindungsgemäßen Lösung liegt somit die Erkenntnis zugrunde, dass es durch Verwendung von Kugelscheiben als Wälzkörper, bei denen die ohnehin nicht mit den Laufbahnen in Wälzkontakt stehenden Bereiche einer Kugel einfach weggelassen werden, möglich ist, einen engen Laufbahnabstand zwischen den einzelnen Wälzkörperreihen zu realisieren und somit gegenüber mehrreihigen Schrägkugellagern einen um 10% bis 20% geringeren axialen Einbauraum für das Lager zu erzielen, ohne dabei Abstriche an der Tragfähigkeit des Schrägwälzlagers in Kauf nehmen zu müssen. Eine weitere Erkenntnis der Erfindung liegt darüber hinaus darin, dass die an den Kugelscheiben entstehenden parallelen Seitenflächen gleichzeitig zu einer selbsttätigen gegenseitigen Führung der Kugelscheiben in ihren Laufbahnen genutzt werden können, so dass im Zusammenhang mit den bei Lagerkugeln veränderlichen, bei Kugelscheiben jedoch konstanten Drehachsen derselben und im Zusammenwirken mit einem entsprechenden Lagerkäfig ein bei derartigen Wälzkörpern wahrscheinliches Schränken nahezu ausgeschlossen werden kann.

Bevorzugte Ausgestaltungen und vorteilhafte Weiterbildungen des erfindungsgemäß ausgebildeten mehrreihigen Schrägwälzlagers werden in den Unteransprüchen beschrieben.

Danach ist es gemäß Anspruch 2 bei dem erfindungsgemäß ausgebildeten Schrägwälzlager vorgesehen, dass die Wälzkörper jeder Reihe bevorzugt unterschiedliche Radien an ihren Laufflächen aufweisen. Bei der Lagerung der Kegelritzelwelle in einem Kraftfahrzeug-Hinterachsgetriebe durch zwei mit jeweils zwei Reihen Kugelscheiben ausgebildete Schrägwälzlager mit unterschiedlichen Lagerdurchmessern hat es sich dabei hinsichtlich der aufzunehmenden Radial- und Axialkräfte besonders vorteilhaft erwiesen, die dem Kegelritzel am nächsten bzw. am weitesten beabstandete jeweils erste Reihe der Kugelscheiben ausgehend von einer größeren Kugelgrundform an ihren Laufflächen mit einem größeren Radius auszubilden und für die Laufflächen der zweiten Reihe der Kugelscheiben ausgehend von einer kleineren Kugelgrundform einen kleineren Radius vorzusehen. Bei anderen Anwendungen eines erfindungsgemäßen zweireihigen Schrägwälzlagers kann es jedoch auch von Vorteil sein, jede Reihe der Kugelscheiben mit gleichen Radien an ihren Laufflächen auszubilden oder bei Schrägwälzlagern mit mehr als zwei Reihen von Kugelscheiben die einzelnen Reihen der Kugelscheiben mit gleichen und ungleichen Radien an ihren Laufflächen auszubilden und in jeder möglichen Form miteinander zu kombinieren.

Ausgehend von der zuvor beschriebenen Ausbildung ist es nach Anspruch 3 ein weiteres Merkmal des erfindungsgemäß ausgebildeten Schrägwälzlagers, dass die Wälzkörper jeder Reihe bevorzugt verschiedene Breiten zwischen deren Seitenflächen aufweisen oder alternativ mit der gleichen Breite zwischen ihren Seitenflächen ausgebildet sind. Auch diesbezüglich hat es sich bei der Lagerung der Kegelritzelwelle in einem Kraftfahrzeug-Hinterachsgetriebe durch zwei mit jeweils zwei Reihen Kugelscheiben ausgebildete Schrägwälzlager mit unterschiedlichen Lagerdurchmessern hinsichtlich der aufzunehmenden Radial- und Axialkräfte als vorteilhaft erwiesen, die dem Kegelritzel am nächsten bzw. am weitesten beabstandete jeweils erste Reihe der Kugelscheiben ausgehend von einer größeren Kugelgrundform mit einer größeren Breite zwischen deren Seitenflächen auszubilden und für die Laufflächen der zweiten Reihe der Kugelscheiben ausgehend von einer kleineren Kugelgrundform eine kleinere Breiten zwischen deren Seitenflächen vorzusehen. Es kann jedoch auch hier bei anderen Anwendungen eines erfindungsgemäßen zweireihigen Schrägwälzlagers von Vorteil sein, jede Reihe der Kugelscheiben mit der gleichen Breite auszubilden oder bei Schrägwälzlagern mit mehr als zwei Reihen von Kugelscheiben die einzelnen Reihen der Kugelscheiben mit gleichen und ungleichen Breiten auszubilden und in jeder möglichen Form miteinander zu kombinieren.

Gemäß Anspruch 4 zeichnet sich das erfindungsgemäß ausgebildete Schrägwälzlager darüber hinaus noch dadurch aus, dass die jeweils auf einer Querachse angeordneten Wälzkörper jeder Reihe bevorzugt in einer gemeinsamen Tasche des bevorzugt als Fensterkäfig ausgebildeten Lagerkäfigs angeordnet sind. Dies hat sich insbesondere vorteilhaft bei erfindungsgemäß ausgebildeten Schrägwälzlagern mit mehr als zwei nebeneinander angeordneten Reihen Kugelscheiben erwiesen, da dadurch die Montagekosten für das Lager erheblich gesenkt werden können. Bei erfindungsgemäß ausgebildeten Schrägwälzlagern mit lediglich zwei nebeneinander angeordneten Reihen Kugelscheiben, wie denen zur Lagerung der Kegelritzelwelle in einem Kraftfahrzeug-Hinterachsgetriebe, ist es jedoch auch möglich, die Kugelscheiben beider Reihen anstelle in gemeinsamen Taschen eines Fensterkäfigs in den getrennten Taschen zweier Kamm- oder Schnappkäfige zu führen.

Eine zweckmäßige Weiterbildung des erfindungsgemäß ausgebildeten Schrägwälzlagers ist es nach Anspruch 5 desweiteren, dass die Laufflächen der Wälzkörper jeder Reihe bevorzugt den gleichen Radius wie deren Laufbahnen in den Lagerringen aufweisen und mit diesen in Linienkontakt stehen. Da die Kugelscheiben im Gegensatz zu herkömmlichen Lagerkugeln eine konstante Drehachse aufweisen, ist es somit möglich, sowohl die Laufflächen der Kugelscheiben als auch die Laufbahnen in den Lagerringen mit jeweils dem gleichen Radius auszubilden und somit anstelle des bei bekannten Schrägkugellagern auftretenden nachteiligen Punktkontaktes zwischen den Wälzkörpern und den Laufbahnen einen vorteilhaften Linienkontakt zu realisieren, durch den eine gleichmäßig Flächenpressung mit niedrigem Spannungsniveau zwischen den Wälzkörpern und den Laufbahnen und zugleich eine Erhöhung der Tragfähigkeit des Schrägwälzlagers erreicht wird.

Schließlich wird es als vorteilhafte Ausgestaltung des erfindungsgemäß ausgebildeten Schrägwälzlagers durch die Ansprüche 6 und 7 noch vorgeschlagen, dass die Laufbahnen in den Lagerringen jeweils an ihren äußeren Randbereichen und/oder die Laufflächen der Wälzkörper jeweils an ihren an die Seitenflächen angrenzenden Randpartien in ein logarithmisch abfallendes Profil übergehen, wobei der Flächenanteil der mit einem logarithmisch abfallenden Profil ausgebildeten äußeren Randbereiche der Laufbahnen und/oder der Randpartien der Laufflächen der Wälzkörper bevorzugt jeweils etwa 10% bis 40 % einer Laufbahnfläche beziehungsweise einer Lauffläche eines Wälzkörpers beträgt. Bei zugleich die Kugelscheiben überlappend ausgebildeten Schulterkanten der Laufbahnen der Lagerringe können durch diese Maßnahme in vorteilhafter Weise die bei bekannten Schrägkugellagern nach Aufbrauch der Schmiegung im Bereich der Schulterkanten auftretenden nachteiligen hohen Kantenspannungen durch die Wälzkörper vermieden werden, wobei es sich bei den zur Lagerung der Kegelritzelwelle in einem Kraftfahrzeug-Hinterachsgetriebe vorgesehenen zweireihigen Schrägwälzlagern als ausreichend erwiesen hat, nur die Laufflächen der Wälzkörper jeweils an ihren Randpartien mit einem logarithmisch abfallenden Profil auszubilden.

Das erfindungsgemäß ausgebildete mehrreihige Schrägwälzlager weist somit gegenüber den aus dem Stand der Technik bekannten Schrägwälziagern den Vorteil auf, dass es sich durch die Verwendung von Kugelscheiben als Wälzkörper vor allem gegenüber mehrreihigen Schrägkugellagern durch einen minimierten axialen und radialen Einbauraum bei gleicher oder erhöhter Tragfähigkeit auszeichnet. Da derartige Kugelscheiben ähnlich kostengünstig wie herkömmliche Lagerkugeln herstellbar sind und auch der Fertigungsaufwand eines erfindungsgemäß ausgebildeten Schrägwälzlagers mit dem eines Schrägkugellagers vergleichbar ist, kann durch den verringerte Materialaufwand und das verringerte Gewicht auch von günstigen Herstellungskosten für das erfindungsgemäß ausgebildeten Schrägwälzlagers ausgegangen werden. Darüber hinaus wird durch den Linienkontakt zwischen den Wälzkörpern und deren Laufbahnen sowie durch die Ausbildung der Laufflächen der Wälzkörper mit einem logarithmisch abfallenden Profil der bei bekannten Schrägkugellagern aus einer hohen Flächenpressung und einer hohen Kantenspannung durch die Wälzkörper resultierende erhöhte Verschleiß der Laufbahnen der Wälzkörper wirksam vermieden, so dass derartig ausgebildete Schrägwälzlager auch eine erhöhte Lebensdauer aufweisen. Dabei ist der Einsatzbereich erfindungsgemäß ausgebildeter Schrägwälzlager nicht nur auf die beispielhaft genannte zweireihige Anwendung zur Lagerung der Kegelritzelwelle in einem Kraftfahrzeug-Hinterachsgetriebe beschränkt, sondern neben vielen anderen möglichen Anwendungen einzeln auch auf Festlager zur Lagerung der Hauptspindel von Werkzeugmaschinen oder in spiegelverkehrter doppelter Anordnung direkt nebeneinander auch auf vierreihige Radlager von Kraftfahrzeugen erweiterbar. Ebenso ist es denkbar, zwei- oder mehrreihige Radialwälzlager mit gerade nebeneinander angeordneten Wälzkörpern mit den gleichen erfindungsgemäßen Merkmalen wie das beschriebene Schrägwälzlager auszubilden.

### Kurze Beschreibung der Zeichnungen

Eine bevorzugte Ausführungsform des erfindungsgemäß ausgebildeten mehrreihigen Schrägwälzlagers wird nachfolgend unter Bezugnahme auf die beigefügten Zeichnungen näher erläutert. Dabei zeigen:
- Figur 1: eine Teilansicht einer Schnittdarstellung eines Kraftfahrzeug- Hinterachsgetriebes mit der Lagerung der Kegelritzelwelle durch zwei erfindungsgemäß ausgebildete Schrägwälzlager;
- Figur 2: eine vergrößerte Darstellung der Hälfte eines Querschnitts durch ein erfindungsgemäß ausgebildetes Schrägwälzlager;
- Figur 3: eine vergrößerte Darstellung des Kontaktes zwischen einem Wälzkörper und dessen Laufbahn im äußeren Lagerring des er- findungsgemäß ausgebildeten Schrägwälzlagers.

### Ausführliche Beschreibung der Zeichnungen

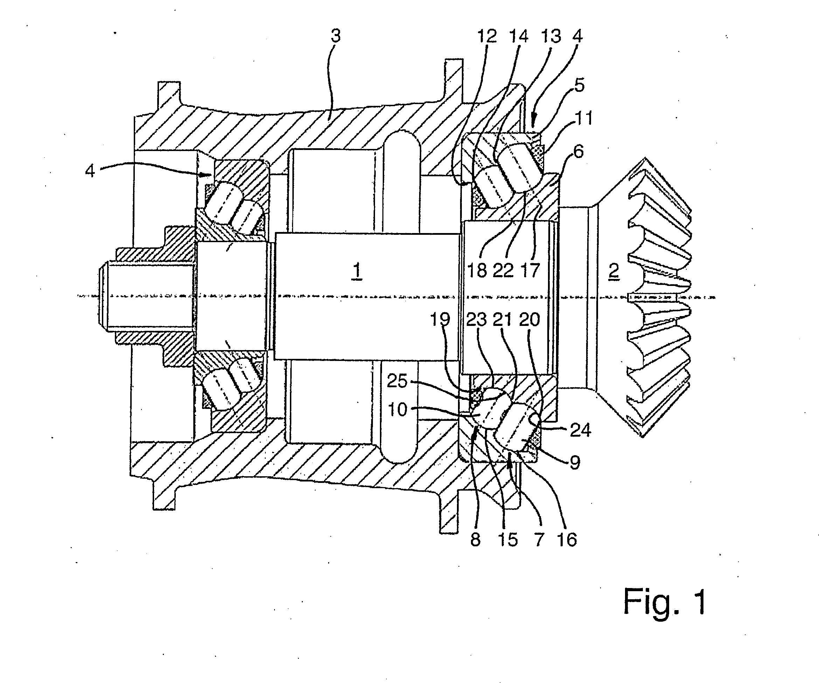

Aus Figur 1 geht deutlich ein Teil eines Kraftfahrzeug-Hinterachsgetriebes hervor, mit dem das Motordrehmoment über eine Kegelritzelwelle 1 mit einem Kegelritzel 2 sowie über ein nicht dargestelltes Tellerrad auf die Antriebsachse eines Kraftfahrzeuges übertragbar ist. Die Kegelritzelwelle 1 wird dabei im Gehäuse 3 des Hinterachsgetriebes über zwei voneinander beabstandete und gegeneinander angestellte Schrägwälzlager 4 gehalten, die jeweils im Wesentlichen aus einem äußeren Lagerring 5 und einem inneren Lagerring 6 sowie aus einer Vielzahl in zwei Reihen 7, 8 nebeneinander zwischen den Lagerringen 5, 6 angeordneter und durch einen Lagerkäfig 11 in Umfangsrichtung in gleichmäßigen Abständen zueinander gehaltenen Wälzkörpern 9, 10 bestehen. Dabei ist die Innenseite 12 des äußeren Lagerrings 5 beider Schrägwälzlager 4 mit zwei benachbarten und jeweils einseitig durch eine Schulter 13, 14 begrenzten Laufbahnen 15, 16 ausgebildet, die auf gemeinsamen Druckwinkelachsen 17, 18 mit zwei benachbarten und ebenfalls jeweils einseitig durch Schultern 20, 21 begrenzten Laufbahnen 22, 23 in der Außenseite 19 des inneren Lagerrings 5 angeordnet sind, auf denen jeweils eine Reihe 7, 8 der Wälzkörper 9, 10 mit ihren Laufflächen 24, 25 abrollt.

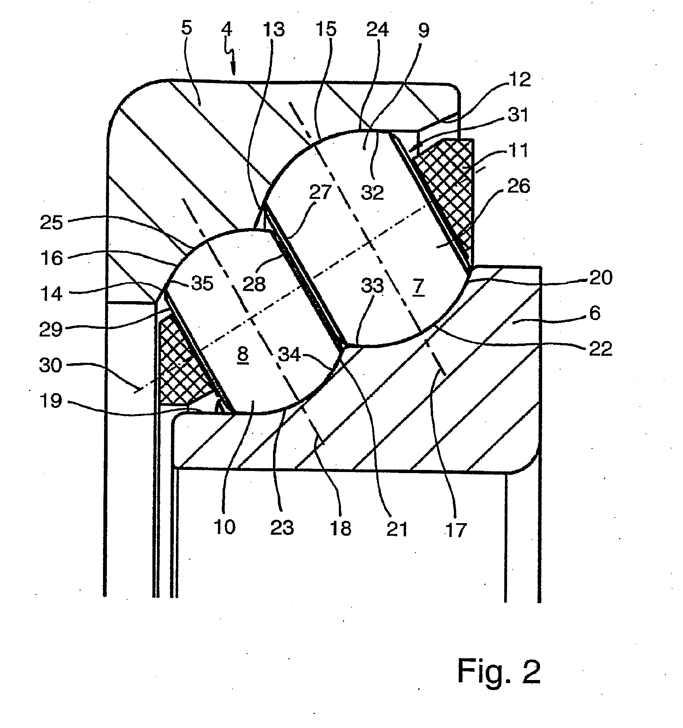

Durch das in Figur 2 vergrößert dargestellte ritzelseitige Schrägwälzlager 4 wird darüber hinaus deutlich, dass bei beiden Schrägwälzlagern 4 die Wälzkörper 9, 10 jeder Reihe 7, 8 erfindungsgemäß als Kugelscheiben mit jeweils zwei symmetrisch von einer Kugelgrundform abgeflachten sowie parallel zueinander angeordneten Seitenflächen 26, 27 und 28, 29 ausgebildet sind, deren Laufbahnen 15, 16 und 22, 23 in den Lagerringen 5, 6 parallel zueinander verlaufende Druckwinkelachsen 17, 18 aufweisen und derart aneinander angrenzend angeordnet sind, dass die jeweils benachbarten Wälzkörper 9, 10 jeder Reihe 7, 8 mit ihren zueinander weisenden Seitenflächen 27, 28 unmittelbar nebeneinander auf einer gemeinsamen, rechtwinklig zu den Druckwinkelachsen 17, 18 verlaufenden Querachse 30 angeordnet und diese Seitenflächen 27, 28 zugleich als gegenseitige Führungsflächen ausgebildet sind.

Ebenso ist aus Figur 2 ersichtlich, dass die Kugelscheiben der dem Kegelritzel 2 am nächsten beabstandeten erste Reihe 7 des ritzelseitigen Schrägwälzlagers 4 ausgehend von einer größeren Kugelgrundform an ihren Laufflächen 24 mit einem größeren Radius ausgebildet sind und eine größere Breite zwischen ihren Seitenflächen 26, 27 aufweisen als die Laufflächen 25 und die Breite zwischen den Seitenflächen 28, 29 der von einer kleineren Kugelgrundform ausgehenden Kugelscheiben der zweiten Reihe 8 des Schrägwälzlagers 4. Die derart ausgebildeten und jeweils auf einer Querachse 30 angeordneten Wälzkörper 9, 10 beider Reihen 7, 8 sind dann, wie lediglich andeutungsweise aus Figur 2 erkennbar ist, in einer gemeinsamen Tasche 31 des Lagerkäfigs 11 angeordnet, der beispielhaft als einteiliger Fensterkäfig dargestellt ist.

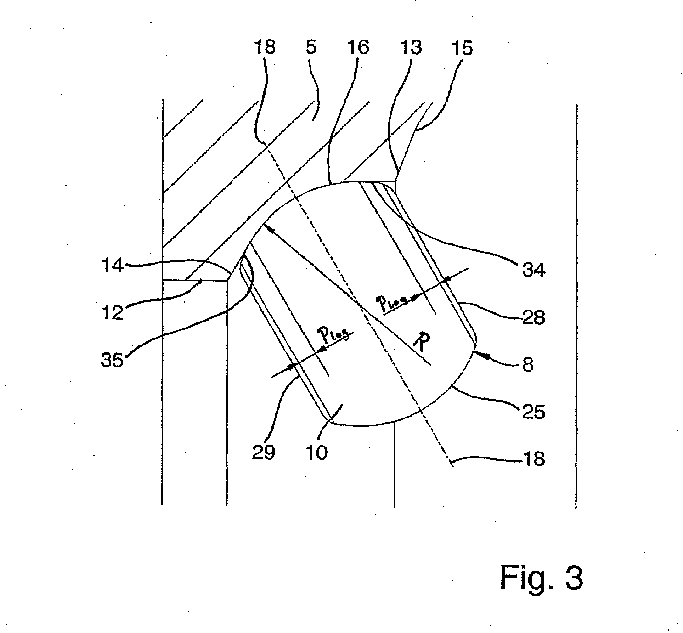

Durch die in Figur 3 gezeigte, stellvertretend für die Wälzkörper 9, 10 beider Reihen 7, 8 gewählte Darstellung des Kontaktes der Wälzkörper 10 zu deren Laufbahn 16 im äußeren Lagerring 5 des erfindungsgemäß ausgebildeten Schrägwälzlagers 4 geht schließlich noch hervor, dass die Laufflächen 24, 25 der Wälzkörper 9, 10 jeder Reihe 7, 8 den gleichen Radius R wie deren Laufbahnen 15, 16 und 22, 23 in den Lagerringen 5, 6 aufweisen und mit diesen in Linienkontakt stehen, so dass eine gleichmäßig Flächenpressung mit niedrigem Spannungsniveau zwischen den Wälzkörpern 9, 10 und den Laufbahnen 15, 16 und 22, 23 erreicht wird. Gleichzeitig gehen die Laufflächen 24, 25 der Wälzkörper 9, 10 zur Vermeidung von im Bereich der Schulterkanten auftretenden nachteiligen hohen Kantenspannungen jeweils an ihren an die Seitenflächen 26, 27, 28, 29 angrenzenden Randpartien 32, 33, 34, 35 in ein in Figur 3 mit P_{log} bezeichnetes logarithmisch abfallendes Profil über, wobei der Flächenanteil dieser mit einem logarithmisch abfallenden Profil ausgebildeten Randpartien 32, 33, 34, 36 deutlich sichtbar etwa 20% einer Lauffläche 24, 25 eines Wälzkörpers 9, 10 beträgt.

### Bezugszahlenliste

- 1: Kegelritzelwelle
- 2: Kegelritzel
- 3: Gehäuse
- 4: Schrägwälzlager
- 5: äußerer Lagerring
- 6: innerer Lagerring
- 7: Reihe
- 8: Reihe
- 9: Wälzkörper
- 10: Wälzkörper
- 11: Lagerkäfig
- 12: Innenseite von 5
- 13: Schulter
- 14: Schulter
- 15: Laufbahn
- 16: Laufbahn
- 17: Druckwinkelachse
- 18: Druckwinkelachse
- 19: Außenseite von 6
- 20: Schulter
- 21: Schulter
- 22: Laufbahn
- 23: Laufbahn
- 24: Laufflächen
- 25: Laufflächen
- 26: Seitenflächen von 9
- 27: Seitenflächen von 9
- 28: Seitenflächen von 10
- 29: Seitenflächen von 10
- 30: Querachse
- 31: Tasche von 11
- 32: Randpartie von 24
- 33: Randpartie von 24
- 34: Randpartie von 25
- 35: Randpartie von 25

## Patentansprüche

1. Mehrreihiges Schrägwälzlager, insbesondere zur Lagerung der Kegelritzelwelle in einem Kraftfahrzeug-Hinterachsgetriebe, welches im Wesentlichen aus einem äußeren Lagerring (5) und einem inneren Lagerring (6) sowie aus einer Vielzahl zumindest in zwei Reihen (7, 8) nebeneinander zwischen den Lagerringen (5, 6) angeordneter Wälzkörper (9, 10) besteht, die durch zumindest einen Lagerkäfig (11) in Umfangsrichtung in gleichmäßigen Abständen zueinander gehalten werden, wobei die Innenseite (12) des äußeren Lagerrings (5) mit zumindest zwei benachbarten und jeweils einseitig durch eine Schulter (13, 14) begrenzten Laufbahnen (15, 16) ausgebildet ist, die auf gemeinsamen Druckwinkelachsen (17, 18) mit zumindest zwei benachbarten und ebenfalls jeweils einseitig durch Schultern (20, 21) begrenzten Laufbahnen (22, 23) in der Außenseite (19) des inneren Lagerrings (5) angeordnet sind, auf denen jeweils eine Reihe (7, 8) der Wälzkörper (9, 10) mit ihren Laufflächen (24, 25) abrollt, **dadurch gekennzeichnet, dass** die Wälzkörper (9, 10) jeder Reihe (7, 8) als Kugelscheiben mit jeweils zwei symmetrisch von einer Kugelgrundform abgeflachten sowie parallel zueinander angeordneten Seitenflächen (26, 27, 28, 29) ausgebildet sind, deren Laufbahnen (15, 16, 22, 23) in den Lagerringen (5, 6) parallel zueinander verlaufende Druckwinkelachsen (17, 18) aufweisen und derart aneinander angrenzend angeordnet sind, dass die jeweils benachbarten Wälzkörper (9, 10) jeder Reihe (7, 8) mit ihren zueinander weisenden Seitenflächen (27, 28) unmittelbar nebeneinander, auf einer gemeinsamen, rechtwinklig zu den Druckwinkelachsen (17, 18) verlaufenden Querachse (30) angeordnet und diese Seitenflächen (27, 28) zugleich als gegenseitige Führungsflächen ausgebildet sind.

2. Mehrreihiges Schrägwälzlager nach Anspruch 1, **dadurch gekennzeichnet, dass** die Wälzkörper (9, 10) jeder Reihe (7, 8) bevorzugt unterschiedliche Radien an ihren Laufflächen (24, 25) aufweisen oder alternativ jede Reihe (7, 8) mit gleichen Radien an ihren Laufflächen (24, 25) ausgebildet ist.

3. Mehrreihiges Schrägwälzlager nach Anspruch 1, **dadurch gekennzeichnet, dass** die Wälzkörper (9, 10) jeder Reihe (7, 8) bevorzugt verschiedene Breiten zwischen deren Seitenflächen (26, 27, 28, 29) aufweisen oder alternativ mit der gleichen Breite zwischen ihren Seitenflächen (26, 27, 28, 29) ausgebildet sind.

4. Mehrreihiges Schrägwälzlager nach Anspruch 1, **dadurch gekennzeichnet, dass** die jeweils auf einer Querachse (30) angeordneten Wälzkörper (9, 10) jeder Reihe (7, 8) bevorzugt in einer gemeinsamen Tasche (31) des bevorzugt als Fensterkäfig ausgebildeten Lagerkäfigs (11) angeordnet sind.

5. Mehrreihiges Schrägwälzlager nach Anspruch 1, **dadurch gekennzeichnet, dass** die Laufflächen (24, 25) der Wälzkörper (9, 10) jeder Reihe (7, 8) bevorzugt den gleichen Radius (R) wie deren Laufbahnen (15, 16, 22, 23) in den Lagerringen (5, 6) aufweisen und mit diesen in Linienkontakt stehen.

6. Mehrreihiges Schrägwälzlager nach Anspruch 5, **dadurch gekennzeichnet, dass** die Laufbahnen (15, 16, 22, 23) in den Lagerringen (5, 6) jeweils an ihren äußeren Randbereichen und/oder die Laufflächen (24, 25) der Wälzkörper (9, 10) jeweils an ihren an die Seitenflächen (26, 27, 28, 29) angrenzenden Randpartien (31, 32, 33, 34) in ein logarithmisch abfallendes Profil (P_{log}) übergehen.

7. Mehrreihiges Schrägwälzlager nach Anspruch 6, **dadurch gekennzeichnet, dass** der Flächenanteil der mit einem logarithmisch abfallenden Profil (P_{log}) ausgebildeten äußeren Randbereiche der Laufbahnen (15, 16, 22, 23) und/ oder der Randpartien (31, 32, 33, 34) der Laufflächen (24, 25) der Wälzkörper (9, 10) jeweils etwa 10% bis 40 % einer Laufbahnfläche beziehungsweise einer Lauffläche (24, 25) eines Wälzkörpers (9, 10) beträgt.

## Claims

1. Multiple-row angular contact antifriction bearing, particularly for mounting the bevel pinion shaft in a motor vehicle rear axle differential, which multiple-row angular contact antifriction bearing comprises substantially an outer bearing ring (5) and an inner bearing ring (6) and a multiplicity of rolling bodies (9, 10) which are arranged at least in two rows (7, 8) next to one another between the bearing rings (5, 6) and are held in the circumferential direction at uniform spacings from one another by at least one bearing cage (11), the inner side (12) of the outer bearing ring (5) being configured with at least two adjacent raceways (15, 16) which are delimited in each case on one side by a shoulder (13, 14) and are arranged on common contact angle axes (17, 18) having at least two adjacent raceways (22, 23), which are likewise delimited in each case on one side by shoulders (20, 21) and on which in each case one row (7, 8) of the rolling bodies (9, 10) rolls by way of their running faces (24, 25), in the outer side (19) of the inner bearing ring (6), **characterized in that** the rolling bodies (9, 10) of each row (7, 8) are configured as spherical disks having in each case two side faces (26, 27, 28, 29) which are flattened symmetrically from a basic spherical shape, are arranged parallel to one another and the raceways (15, 16, 22, 23) of which have contact angle axes (17, 18), which extend parallel to one another in the bearing rings (5, 6), and are arranged adjacently to one another in such a way that the respectively adjacent rolling bodies (9, 10) of each row (7, 8) are arranged with their side faces (27, 28) directly next to one another which point toward one another, on a common transverse axis (30) which extends at right angles to the contact angle axes (17, 18), and these side faces (27, 28) are configured at the same time as mutual guiding faces.

2. Multiple-row angular contact antifriction bearing according to Claim 1, **characterized in that** the rolling bodies (9, 10) of each row (7, 8) preferably have different radii at their running faces (24, 25) or, as an alternative, each row (7, 8) is configured with identical radii at their running faces (24, 25).

3. Multiple-row angular contact antifriction bearing according to Claim 1, **characterized in that** the rolling bodies (9, 10) of each row (7, 8) preferably have different widths between their side faces (26, 27, 28, 29) or, as an alternative, are configured with the same width between their side faces (26, 27, 28, 29).

4. Multiple-row angular contact antifriction bearing according to Claim 1, **characterized in that** the rolling bodies (9, 10), which are arranged in each case on a transverse axis (30), of each row (7, 8) are preferably arranged in a common pocket (31) of the bearing cage (11) which is preferably configured as a window cage.

5. Multiple-row angular contact antifriction bearing according to Claim 1, **characterized in that** the running faces (24, 25) of the rolling bodies (9, 10) of each row (7, 8) preferably have the same radius (R) as their raceways (15, 16, 22, 23) in the bearing rings (5, 6) and are in linear contact with the latter.

6. Multiple-row angular contact antifriction bearing according to Claim 5, **characterized in that** the raceways (15, 16, 22, 23) in the bearing rings (5, 6), in each case at their outer edge regions, and/or the running faces (24, 25) of the rolling bodies (9, 10), in each case at their edge parts (31, 32, 33, 34) which adjoin the side faces (26, 27, 28, 29), merge into a logarithmically falling profile (P_{log}).

7. Multiple-row angular contact antifriction bearing according to Claim 6, **characterized in that** the surface proportion of those outer edge regions of the raceways (15, 16, 22, 23) which are configured with a logarithmically falling profile (P_{log}) and/or of the edge parts (31, 32, 33, 34) of the running faces (24, 25) of the rolling bodies (9, 10) is in each case approximately from 10% to 40% of a raceway face or of a running face (24, 25) of a rolling body (9, 10).

## Revendications

1. Palier à roulements à contact oblique à plusieurs rangées, en particulier pour le support de l'arbre à pignons coniques dans une transmission d'essieu arrière d'un véhicule automobile, qui se compose essentiellement d'une bague de palier extérieure (5) et d'une bague de palier intérieure (6) ainsi que d'une pluralité de corps de roulement (9, 10) disposés au moins en deux rangées (7, 8) les uns à côté des autres entre les bagues de palier (5, 6), lesquels sont maintenus par au moins une cage de palier (11) dans la direction périphérique à intervalles réguliers les uns des autres, le côté intérieur (12) de la bague de palier extérieure (5) étant réalisé avec au moins deux pistes de roulement (15, 16) adjacentes et limitées à chaque fois d'un côté par un épaulement (13, 14), lesquelles sont disposées sur des axes d'angle de pression (17, 18) communs avec au moins deux pistes de roulement adjacentes (22, 23) et également limitées à chaque fois d'un côté par des épaulements (20, 21) dans le côté extérieur (19) de la bague de palier intérieure (6), sur lesquelles roule à chaque fois une rangée (7, 8) des corps de roulement (9, 10) avec leurs surfaces de roulement (24, 25), **caractérisé en ce que** les corps de roulement (9, 10) de chaque rangée (7, 8) sont réalisés sous forme de disques sphériques ayant à chaque fois deux surfaces latérales (26, 27, 28, 29) aplaties symétriquement à partir d'une forme de base sphérique et disposées parallèlement l'une à l'autre, dont les pistes de roulement (15, 16, 22, 23) dans les bagues de palier (5, 6) présentent des axes d'angle de pression (17, 18) s'étendant parallèlement les uns aux autres et sont disposées de manière adjacente les unes aux autres de telle sorte que les corps de roulement (9, 10) respectivement adjacents de chaque rangée (7, 8) soient disposés avec leurs surfaces latérales tournées l'une vers l'autre (27, 28) directement les uns à côté des autres, sur un axe transversal commun (30) s'étendant à angle droit par rapport aux axes d'angle de pression (17, 18), et ces surfaces latérales (27, 28) sont également réalisées sous forme de surfaces de guidage mutuelles.

2. Palier à roulements à contact oblique à plusieurs rangées selon la revendication 1, **caractérisé en ce que** les corps de roulement (9, 10) de chaque rangée (7, 8) présentent de préférence différents rayons sur leurs surfaces de roulement (24, 25) ou en variante chaque rangée (7, 8) est réalisée avec les mêmes rayons sur leurs surfaces de roulement (24, 25).

3. Palier à roulements à contact oblique à plusieurs rangées selon la revendication 1, **caractérisé en ce que** les corps de roulement (9, 10) de chaque rangée (7, 8) présentent de préférence différentes largeurs entre leurs surfaces latérales (26, 27, 28, 29) ou en variante sont réalisées avec la même largeur entre leurs surfaces latérales (26, 27, 28, 29).

4. Palier à roulements à contact oblique à plusieurs rangées selon la revendication 1, **caractérisé en ce que** les corps de roulement (9, 10) de chaque rangée (7, 8), disposés à chaque fois sur un axe transversal (30), sont disposés de préférence dans une cavité commune (31) de la cage de palier (11) réalisée de préférence sous forme de cage à fenêtre.

5. Palier à roulements à contact oblique à plusieurs rangées selon la revendication 1, **caractérisé en ce que** les surfaces de roulement (24, 25) des corps de roulement (9, 10) de chaque rangée (7, 8) présentent de préférence le même rayon (R) que leurs pistes de roulement (15, 16, 22, 23) dans les bagues de palier (5, 6) et sont en contact linéaire avec celles-ci.

6. Palier à roulements à contact oblique à plusieurs rangées selon la revendication 5, **caractérisé en ce que** les pistes de roulement (15, 16, 22, 23) dans les bagues de palier (5, 6), à chaque fois au niveau de leurs régions de bord extérieures, et/ou les surfaces de roulement (24, 25) des corps de roulement (9, 10), à chaque fois au niveau de leurs parties de bord (31, 32, 33, 34) adjacentes aux surfaces latérales (26, 27, 28, 29), se prolongent en un profil (P_{log}) diminuant de manière logarithmique.

7. Palier à roulements à contact oblique à plusieurs rangées selon la revendication 6, **caractérisé en ce que** la proportion de surface des régions de bord extérieures des pistes de roulement (15, 16, 22, 23) réalisées avec un profil (P_{log}) diminuant de manière logarithmique et/ou des parties de bord (31, 32, 33, 34) des surfaces de roulement (24, 25) des corps de roulement (9, 10), vaut à chaque fois environ 10% à 40% d'une surface de piste de roulement, respectivement d'une surface de roulement (24, 25) d'un corps de roulement (9, 10).
